Europäisches Patentamt

European Patent Office

Office européen des brevets

(19)

(11) Veröffentlichungsnummer: **0 044 094**

**A1**

(12) **EUROPÄISCHE PATENTANMELDUNG**

(21) Anmeldenummer: **81200634.4**

(22) Anmeldetag: **10.06.81**

(51) Int. Cl.³: **F 01 K 23/06**
**F 02 C 3/26, B 01 D 53/34**

(30) Priorität: **09.07.80 CH 5247/80**

(43) Veröffentlichungstag der Anmeldung:
**20.01.82 Patentblatt 82/3**

(84) Benannte Vertragsstaaten:
**CH DE GB LI NL SE**

(71) Anmelder: **BBC Aktiengesellschaft Brown, Boveri & Cie.**

**CH-5401 Baden(CH)**

(72) Erfinder: **Pfenninger, Hans, Dr.**
**Bahnhofstrasse 14**
**CH-5400 Baden(CH)**

(54) Verfahren zur Wirbelbettentschwefelung bei Kraftwerken mit Kohlenstaubfeuerung und danach arbeitendes Kraftwerk.

(57) Zur Vermeidung der Nachteile, die mit einer Entschwefelung der Abgase im Wirbelbett der Kesselfeuerung verbunden sind, ist eine dem Kessel (1) nachgeschaltete Wirbelbettkammer (9) vorgesehen, in der die Abgase bei der günstigsten Reaktionstemperatur zwischen 800 und 900°C entschwefelt werden.

EP 0 044 094 A1

- 1 -


Verfahren zur Wirbelbettentschwefelung bei Kraftwerken
mit Kohlenstaubfeuerung und danach arbeitendes Kraftwerk


Die vorliegende Erfindung betrifft ein Verfahren zur
Wirbelbettentschwefelung bei Kraftwerken mit Kohlenstaubfeuerung und ein danach arbeitendes Kraftwerk nach den
Oberbegriffen der Ansprüche 1 und 8.


Es ist bekannt, bei reinen kohlenstaubgefeuerten Dampfanlagen ohne Druckfeuerung die Reinigung und Entschwefelung
der Rauchgase unmittelbar vor dem Kamin vorzunehmen. Dies
geschieht meistens mit Hilfe von Scrubbern unmittelbar vor
dem Kamin. Die dafür verwendeten Entschwefelungsanlagen
sind aber kostspielig und verringern wegen der damit
verbundenen Wärmeverluste den Wirkungsgrad des Kraftwerks.


Es ist deshalb vorgeschlagen worden, die Entschwefelung
in einem Wirbelbett durch Beigabe von schwefelbindenden
Additiven, wie z.B. Dolomit oder Kalkstein, zum Kohlenstaub vorzunehmen. Da diese Entschwefelung am günstigsten
bei Temperaturen um $850^{\circ}C$ abläuft, hat man in die Wirbelschicht, um sie auf diese Temperatur zu bringen, Kühlrohre,
in denen Dampf, Wasser oder Luft aufgeheizt wird, eingebaut.

In Versuchsanlagen hat sich aber gezeigt, dass im Wirbelbett verlegte Kühlrohre durch die bei der Verbrennung freiwerdenden Schwefelverbindungen korrodiert und infolge der Turbulenz im Wirbelbett durch die Brennstoffteilchen auch noch erodiert werden, was zu einer verhältnismässig raschen Zerstörung der Rohre führt.

Aus diesem Grunde wurde vorgeschlagen, die Kühlrohre ausserhalb des Wirbelbettes im Rauchgaszug des Kessels anzuordnen. Wenn man in diesem Fall die Entschwefelung in der Wirbelschicht vornehmen will, ist man gezwungen, die Temperatur in derselben durch einen grossen Luftüberschuss auf den für die Entschwefelung günstigsten Wert von 850°C zu senken. Die Luftüberschusszahl beträgt dabei 4 - 5. Dies bedingt aber einerseits grosse Kesselabmessungen und andererseits wegen der grossen Abgasverluste schlechte Anlagenwirkungsgrade.

Es wurde auch vorgeschlagen, die Verbrennungstemperatur durch Rückführung eines Teiles der Abgase in die Wirbelschicht auf die günstige Reaktionstemperatur für die Entschwefelung zu senken, was aber ebenfalls zu grossen Kesselabmessungen führt. Ausserdem wird dafür zusätzlich ein Abgasverdichter benötigt, der die Abgase auf den Druck der Verbrennungsluft vor dem Kessel bringt. Es ist auch nicht zweckmässig, die Abgase vor der Verdichtung abzukühlen, weil sonst die Verbrennungsluft zu stark abgekühlt und damit die Verbrennung in der Wirbelschicht unstabil wird. Der Gesamtwirkungsgrad einer solchen Anlage wäre daher nicht besonders gut.

Mit dem vorliegenden, im kennzeichnenden Teil der Patentansprüche 1 und 8 definierten Verfahren bzw. Kraftwerk sollen die vorerwähnten Nachteile der bekannten, mit

- 3 -

Kohlenstaub gefeuerten Kraftwerksanlagen vermieden werden.

Unter Bezugnahme auf die in der Zeichnung dargestellten Ausführungsbeispiele wird die Erfindung im folgenden näher erläutert. In der Zeichnung stellen dar:

Fig. 1 ein mit Kohlenstaub druckgefeuertes, kombiniertes Gas/Dampfturbinenkraftwerk,

Fig. 2 ein mit Kohlenstaub druckgefeuertes Dampfturbinenkraftwerk, und

Fig. 3 ein kohlenstaubgefeuertes Dampfturbinenkraftwerk ohne Druckfeuerung.

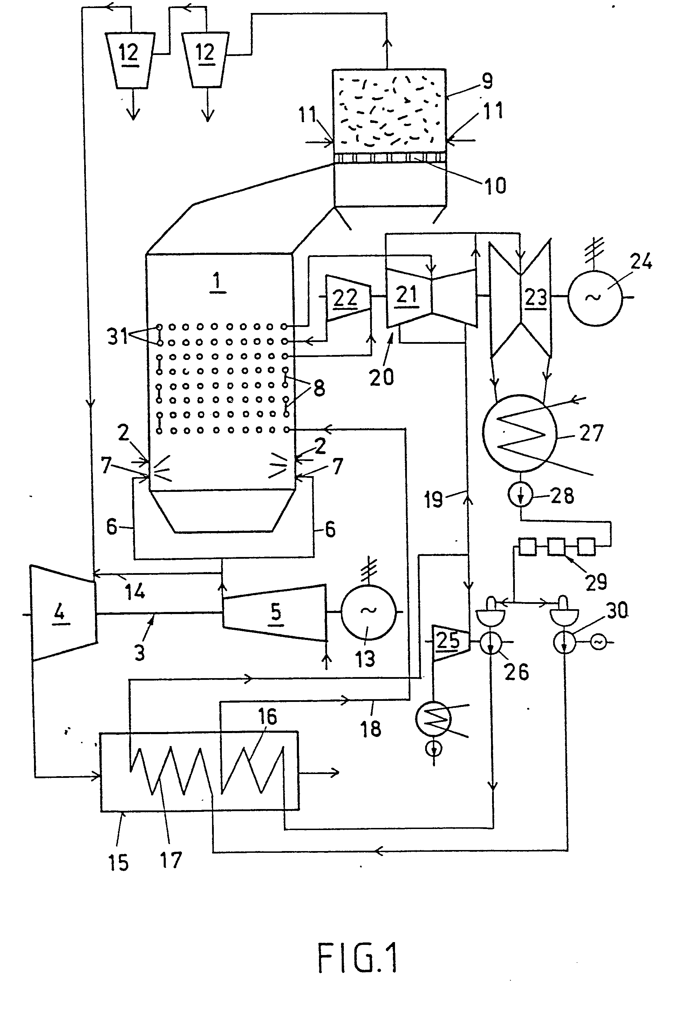

Bei der in Fig. 1 dargestellten kombinierten Anlage bedeuten die Pfeile in den Leitungen die Strömungsrichtung der betreffenden Medien. Beim Kessel 1 wird Kohlenstaub durch die Einlassdüsen 2 eingeführt. Gleichzeitig können dort noch für die Verbrennung günstige Zusatzstoffe mit eingeblasen werden. Die Verbrennungsluft wird von einer Ladegruppe 3 geliefert, bestehend aus einer Gasturbine 4 und einem Verdichter 5, der die verdichtete Luft über Verbrennungsluftleitungen 6 und Luftdüsen 7 unter den Rost des Kessels fördert. Die Kesselheizflächen, also Verdampfer und Ueberhitzer, sind mit 8 bezeichnet. Die aus dem Kessel 1 mit einer Temperatur von etwa 800 - 900°C austretenden Abgase gelangen am Kesselende in eine Wirbelbettkammer 9, die den Kern der Erfindung bildet. Zur Homogenisierung der Geschwindigkeit über den Eintrittsquerschnitt der Wirbelbettkammer 9 ist ihr Boden als Gitterrost 10 ausgebildet. Die Entschwefelung der Abgase kann nun in der Wirbelbettkammer 9 bei der günstigsten Reaktionstemperatur zwischen 800 und 900°C erfolgen. Für die Einbringung der dazu erforderlichen Additive, wie Dolomit oder Kalkstein, sind Einführkanäle 11 vorgesehen. Die entschwefelten Abgase gelangen dann in die Staubabscheider 12 und sodann in gereinigtem Zustand mit gegenüber dem Wirbelbett nur geringfügig niedrigerer Temperatur in die Gasturbine 4, die neben dem Verdichter 5 noch einen Netzgenerator 13 antreibt. Aus der Verdichterluftleitung wird über eine Kühlluftleitung 14 Luft zur Kühlung der hochtemperaturbelasteten Gasturbinenkomponenten abgezweigt.

Zur Ausnutzung der Wärmeenergie der noch sehr heissen Gase nach der Gasturbine ist dieser ein Abhitzekessel 15 nachgeschaltet, der beispielsweise zur Speisewasservorwärmung in einer Vorwärmerschleife 16 und zur Dampferzeugung in einer Verdampferheizfläche 17 dienen kann. Der in dieser erzeugte Dampf wird im vorliegenden Falle über eine Leitung 18, 19 zum grösseren Teil in die Mitteldruckstufe 21 der Hauptdampfturbine 20 geleitet, die ausserdem noch eine Hochdruckstufe 22 und eine Niederdruckstufe 23 umfasst und im übrigen zum Antrieb des Netzgenerators 24 ihren Dampf aus dem Kessel 1 erhält. Der kleinere Teil des in der Verdampferheizfläche 17 erzeugten Dampfes wird einer Hilfsdampfturbine 25 zum Antrieb einer Speisewasserpumpe 26 zugeführt, die die Vorwärmerschleife 16 versorgt. Weitere Hauptteile der Anlage sind ein Kondensator 27 für die Hauptdampfturbine 20, eine Vakuumpumpe 28, Niederdruckdampf-Speisewasservorwärmer 29 sowie eine elektromotorisch angetriebene Speisepumpe 30 für die Versorgung der Verdampferheizfläche 17 im Abhitzekessel 15.

Zur Erhöhung des thermischen Wirkungsgrades wird, wie man aus der Leitungsführung für die Hochdruckstufe 22 erkennt, der Abdampf aus dieser in einem Zwischenerhitzer 31 vor dem Eintritt in die Mitteldruckstufe zwischenüberhitzt.

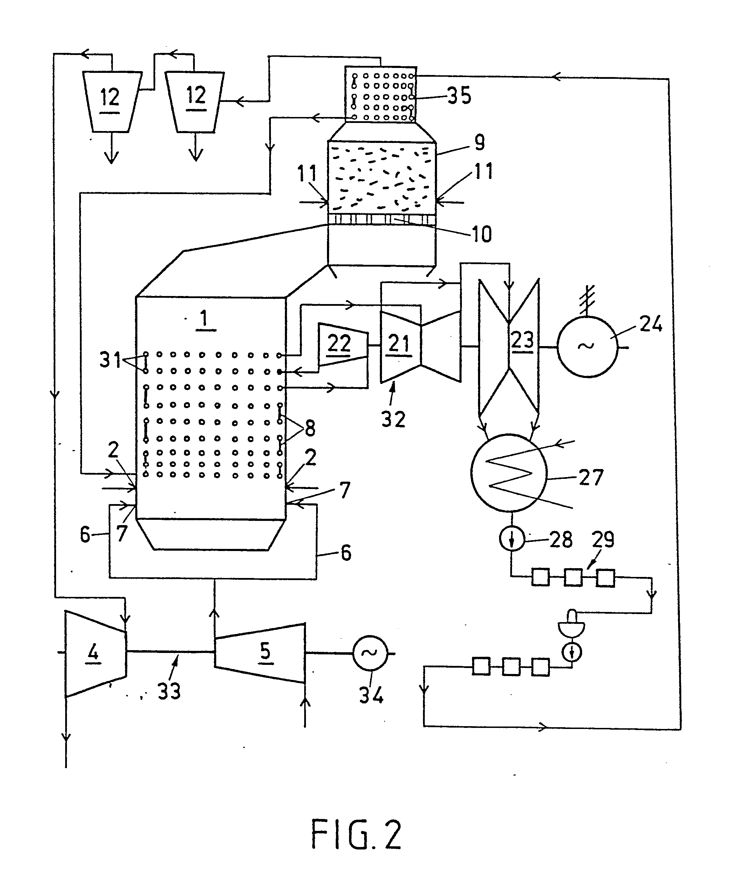

Anstatt die Abgase nach Verlassen der Wirbelbettkammer und Entstaubung direkt in die Gasturbine zu leiten, könnten sie zunächst, beispielsweise in einem Ekonomizer, auf z.B. 400°C abgekühlt und erst dann, nach der Entstaubung, für die bei dieser niedrigen Temperatur handelsübliche Staubabscheider genügen, in die Gasturbine geführt werden. Ihre Leistung reicht dann aber nur zum Antrieb des Verdichters, es fällt der Generator weg und man erhält das in der Fig. 2 dargestellte reine Dampfturbinenkraftwerk, dessen Kessel 1, deren Wirbelbettkammer 9 und Dampfturbine 32 neben anderen erfindungsunwesentlichen Elementen gleich aufgebaut und daher mit den gleichen Bezugszahlen versehen sind wie die entsprechenden Komponenten bei der kombinierten Anlage nach Fig. 1. Nach der Arbeitsleistung in der Gasturbine 4 werden die auf etwa 150°C abgekühlten Abgase direkt in den Kamin und ins Freie abgeführt.

Die Gasturbine 4 und der Verdichter 5 bilden also eine reine Ladegruppe 33, für die ein Startmotor 34 vorgesehen sein muss, während bei der Ladegruppe 3 der kombinierten Anlage nach Fig. 1 zum Starten der Netzgenerator als Motor geschaltet werden kann.

gase nach der Entschwefelung in der Wirbelbettkammer 9 zuerst in einen Ekonomizer 35, von wo sie, beispielsweise auf 400°C abgekühlt, nach Entstaubung in den Abscheidern 12 der Gasturbine zugeführt werden. Wegen der verhältnismässig tiefen Gastemperatur besteht für die Staubabscheider und die Gasturbine keine Korrosionsgefahr. Bei dieser Temperatur von etwa 400°C sind sogar im Handel erhältliche elektrostatische Staubabscheider verwendbar.

Bei den beiden beschriebenen Anlagen wurden als Temperatur in der Wirbelbettkammer 800 - 900°C angegeben, weil diese eine gute Entschwefelung gewährleistet. Durch entsprechende Dimensionierung der Heizflächen kann für andere Zwecke in der Wirbelbettkammer aber auch eine gewünschte andere Temperatur erhalten werden. Durch die erfindungsgemässe Trennung des Entschwefelungsvorganges von der Verbrennung im Kessel und seine Verlegung in eine eigene Wirbelbettkammer ergibt sich eine Reihe von Vorteilen. Die Verbrennung und die Wärmeabfuhr erfolgen in einem normalen Kessel ohne die mit einer Entschwefelung im Kessel verbundenen Komplikationen und nachteiligen Beeinflussungen des Verbrennungsvorganges. Die Anlage lässt sich mit kleinem Luftüberschuss betreiben und weist daher einen hohen Wirkungsgrad auf und da die Kühlrohre nicht im Wirbelbett liegen, fällt auch der andernfalls vorhandene Korrosions- und Erosionsangriff weg.

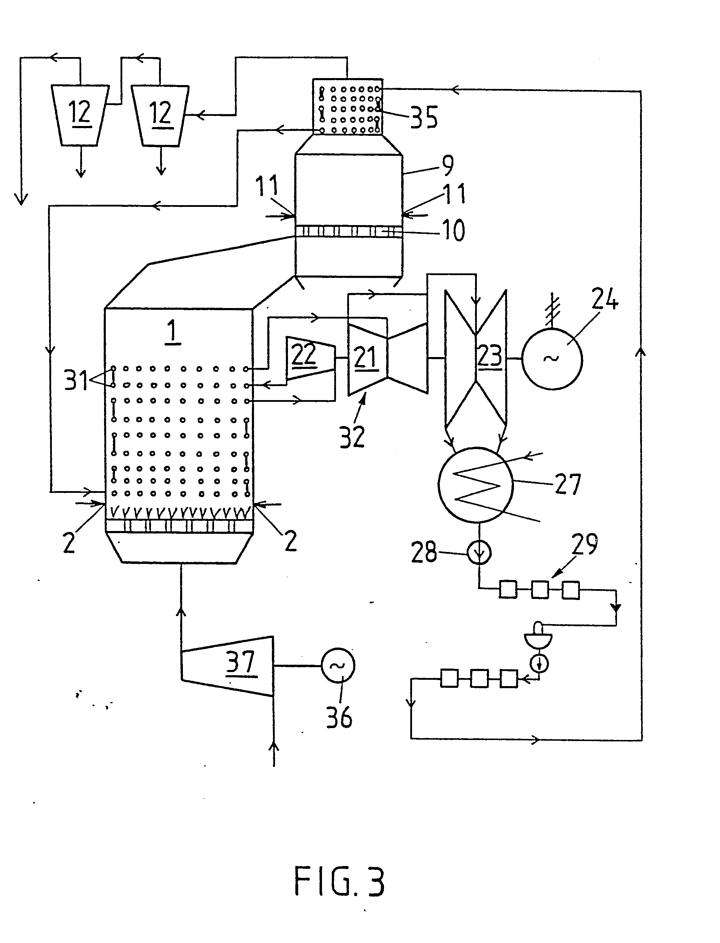

Die Anlage nach Fig. 3 arbeitet ohne Ueberdruck im Verbrennungsraum des Kessels. Die Luftzufuhr erfolgt dabei also durch ein von einem Elektromotor 36 angetriebenes Gebläse 37 unter annähernd Atmosphärendruck und die Abgase strömen nach Passieren der Staubabscheider 12 direkt in den Kamin und ins Freie. Die übrigen Komponenten dieser Anlage sind, soweit vorhanden, gleich wie in

- 7 -

Patentansprüche

1. Verfahren zur Wirbelbettentschwefelung bei Kraftwerken mit Kohlenstaubfeuerung, die eine Dampfturbogruppe aufweisen, dadurch gekennzeichnet, dass die Entschwefelung der Abgase in einem ausserhalb der Feuerung (1) befindlichen Wirbelbett bei einer für die Entschwefelungsreaktion günstigen Temperatur unter Zusatz schwefelbindender Additive vorgenommen wird, wobei diese Temperatur durch entsprechende Wärmeabgabe im Kessel erzielt wird, und dass die entschwefelten Abgase anschliessend entstaubt werden.

2. Verfahren nach Anspruch 1 bei druckgefeuerten Kraftwerken, die neben der Dampfturbogruppe eine Gasturbinen-Ladegruppe aufweisen, dadurch gekennzeichnet, dass die Abgase im Kessel vor dem Eintritt in das Wirbelbett auf eine Temperatur von 800-900$^{\circ}$C abgekühlt werden und einen Druck von wenigstens etwa 10 bar aufweisen, und dass die entschwefelten und entstaubten Abgase zur Arbeitsleistung der Gasturbine der Ladegruppe zugeführt werden, deren Verdichter die Verbrennungsluft für den Kessel liefert.

3. Verfahren nach Anspruch 2, dadurch gekennzeichnet, dass die aus der Gasturbine austretenden Abgase zur weiteren Wärmeausnutzung in einen Abhitzekessel (15) geleitet werden und dass die Gasturbine (4) ausser dem Verdichter (5) einen Netzgenerator (13) antreibt.

4. Verfahren nach Anspruch 3, dadurch gekennzeichnet, dass die Abgaswärme im Abhitzekessel (15) zur Speisewasservorwärmung und zur Erzeugung von Niederdruckdampf benutzt und der Niederdruckdampf teils in eine Mitteldruckstufe (21) der Hauptdampfturbine (20) und teils
in eine Hilfsdampfturbine (25) zum Antrieb einer
Speisewasserpumpe (26) geleitet wird.

5. Verfahren nach Anspruch 2, dadurch gekennzeichnet,
dass die Abgase nach dem Wirbelbett auf eine Temperatur von ca. 400°C abgekühlt werden.

6. Verfahren nach Anspruch 5, dadurch gekennzeichnet,
dass die Abkühlung der entschwefelten Abgase auf ca.
400°C nach ihrem Austritt aus dem Wirbelbett in einem
Ekonomizer erfolgt und dass die so abgekühlten Abgase nach ihrer Entstaubung zur Arbeitsleistung für
den Verdichterantrieb in eine Entspannungsturbine geleitet werden.

7. Verfahren nach Anspruch 1, dadurch gekennzeichnet, dass
die entschwefelten und entstaubten Abgase unmittelbar
über den Kamin ins Freie geleitet werden.

8. Kraftwerk zur Ausführung des Verfahrens nach Anspruch
dadurch gekennzeichnet, dass im Abgaskanal nach dem
Kessel (1) eine Wirbelbettkammer (9) zur Entschwefelung vorgesehen ist.

9. Kraftwerk nach Anspruch 8, gekennzeichnet durch eine
zur Aufladung des Kessels (1) dienende, aus einer Gasturbine (4) und einem Verdichter (5) bestehende Ladegruppe (3).

10. Kraftwerk nach Anspruch 9, dadurch gekennzeichnet, dass
nach der Gasturbine (4) ein Abhitzekessel (15) mit einer Verdampferheizfläche (17) und einer Vorwärmerschleife (16) vorgesehen ist, und dass die Verdampferheizfläche einesteils mit der Mitteldruckstufe (21)
der Hauptdampfturbine (20) und andernteils mit einer
Hilfsdampfturbine (25) einer für die Vorwärmerschleife
(16) vorgesehenen Speisewasserpumpe verbunden ist.

11. Kraftwerk nach Anspruch 10, dadurch gekennzeichnet,
dass die Gasturbine (4) der Ladegruppe (3) mit einem
Netzgenerator zur Erzeugung elektrischer Leistung
gekuppelt ist.

12. Kraftwerk nach Anspruch 10, dadurch gekennzeichnet,
dass der Wirbelbettkammer (9) ein Ekonomizer (35)
nachgeschaltet und die Gasturbine der Ladegruppe
eine Entspannungsturbine ist.

B e z e i c h n u n g s l i s t e

---

| | | |
|---|---|---|
| 1 | | Kessel |
| 2 | | Einblasdüsen für Kohlenstaub |
| 3 | | Ladegruppe mit Netzgenerator |
| 4 | | Gasturbine |
| 5 | | Verdichter |
| 6 | | Verbrennungsluftleitungen |
| 7 | | Luftdüsen |
| 8 | | Kesselheizflächen |
| 9 | | Wirbelbettkammer |
| 10 | | Gitterrost |
| 11 | | Einführkanäle für Entschwefelungsadditive |
| 12 | | Staubabscheider |
| 13 | | Netzgenerator |
| 14 | | Kühlluftleitung |
| 15 | | Abhitzekessel |
| 16 | | Vorwärmerschleife |
| 17 | | Verdampferheizfläche |
| 18, 19 | | Dampfleitung |
| 20 | | Hauptdampfturbine |
| 21 | | Mitteldruckstufe |
| 22 | | Hochdruckstufe |
| 23 | | Niederdruckstufe |
| 24 | | Netzgenerator |
| 25 | | Hilfsdampfturbine |
| 26 | | Speisewasserpumpe |
| 27 | | Kondensator |
| 28 | | Vakuumpumpe |
| 29 | | Niederdruckdampf-Speisewasservorwärmer |
| 30 | | Speisepumpe |
| 31 | | Zwischenüberhitzer |
| 32 | | Dampfturbine |
| 33 | | Ladegruppe |
| 34 | | Startmotor |
| 35 | | Ekonomizer |
| 36 | | Elektromotor |
| 37 | | Gebläse |

---

FIG.1

FIG.2

FIG.3

## EUROPÄISCHER RECHERCHENBERICHT

| Kategorie | EINSCHLÄGIGE DOKUMENTE<br>Kennzeichnung des Dokuments mit Angabe. soweit erforderlich. der maßgeblichen Teile | betrifft Anspruch | KLASSIFIKATION DER ANMELDUNG (Int. Cl.³) |
|---|---|---|---|
| X | <u>DE - A - 2.650 491</u> (STEAG A.G.)<br>  * Seite 12, Spalte 7 - Seite 14, Spalte 4 * | 1-4,8-11 | F 01 K 23/06<br>F 02 C 3/26<br>B 01 D 53/34 |
| | -- | | |
| | <u>GB - A - 2.010 973</u> (BBC BROWN BOVERI)<br>  * Seite 2, Zeilen 41-72 * | 5,6,12 | |
| | -- | | |
| | <u>DE - A - 2.842 983</u> (BBC BROWN BOVERI)<br>  * Seite 5, Spalte 3 * | 4 | **RECHERCHIERTE SACHGEBIETE** (Int. Cl.³) |
| | -- | | F 01 K 23/00<br>F 02 C 3/00<br>B 01 D 53/00<br>F 22 B 1/00 |
| A | <u>US - A - 4.116.005</u> (WILLYOUNG) | | |
| A | <u>GB - A - 1.498 814</u> (ROLLS-ROYCE) | | |
| | ----- | | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L. aus andern Grunden angeführtes Dokument
&: Mitglied der gleichen Patent- familie. übereinstimmendes Dokument

Der vorliegende Recherchenbericht wurde für alle Patentansprüche erstellt.

| Recherchenort | Abschlußdatum der Recherche | Prüfer |
|---|---|---|
| | | DAVID |